# EUROPEAN PATENT SPECIFICATION

(11) **EP 0 820 223 B1**
(45) Date of publication and mention of the grant of the patent: **05.03.2003**
(21) Application number: 96912677.0
(22) Date of filing: 11.04.1996
(51) Int. Cl.: A01M 1/00, A01M 1/20

(54) **TERMITE BAIT STATION**
TERMITENKÖDER
APPAT POUR TERMITES

(30) Priority: 11.04.1995 US 420275; 07.06.1995 US 483346
(43) Date of publication of application: 28.01.1998
(73) Proprietor: FMC CORPORATION, Philadelphia, PA 19103 (US)
(72) Inventor: MEGARGLE, William, Francis, Beverly, NJ 08010-1618 (US); MILLINER, John, Ernest, Haddonfield, NJ 08033-3922 (US); ANDIS, Michael, Dea, Saddle River, NJ 07458-3008 (US); SIMCOX, P., David, Washington Crossing, PA 18977-1507 (US); BALLARD, James, Bruce, Medford, NJ 08055-3465 (US)
(74) Representative: W.P. Thompson & Co.
(86) International application number: US9604986
(87) International publication number: WO96032009

(56) References cited:
- US-A- 4 823 506
- US-A- 4 921 696
- US-A- 4 958 456
- US-A- 5 177 107
- US-A- 5 238 681
- US-A- 5 329 726

## Description

The present invention relates generally to the control of termites. In particular, the present invention relates to the control of such insects using an apparatus containing bait impregnated with a slow acting toxicant For a discussion of social insects, see generally United States Patent Number 5,152,992. The patent discusses social insects and their habits.

In the prior art, various techniques of spraying fast acting insecticides in a structure are used to eliminate social insects such as termites in the structure. For eliminating social insects in the ground tubular instruments with a small surface area to volume ratio were used.

It is an object of one embodiment of the invention to provide an apparatus and method for eliminating social insects such as termites in a structure.

It is an object of another embodiment of the invention to provide an apparatus and method for eliminating social insects in the ground.

US-A-5329726 describes a termite monitoring and controlling station omprising a housing having a plurality of apertures into which a non-toxic cartridge is inserted

The cartridge comprises a bait material formed from an ager mixture, processed decayed birch, uric acid and water once termites are detected, a pesticide containing bait cartridge is substituted for the non-toxic bait cartridge. The pesticide is preferably of the delayed action type, or an insect growth regulator, pathogen or metabolic inhibitor.

US-A-4823506 discloses an insect bait device for exterminating crawling insects. The device comprises a housing that includes substantially identical first and second housing portions. The housing portions, when joined together, define means for entry into the device by an insect. An absobent pad impregnated with an insecticide composition is removably retained in one of the housing portions; or such a pad is removably retained in each of the first and second housing portions to provide an insect bait device which may utilize either of its housing portions as its base.

The present invention provides a method and apparatus for mounting within or on a structure to eliminate social insects such as termites.

According to the present invention there is provided an apparatus for controlling termites in a structure with a known location for active termite activity, comprising:
a cellulose substrate impregnated with a slow acting toxicant;
an outer cover, further comprising a top cover and a bottom cover, wherein the outer cover surrounding the cellulose substrate, wherein the outer cover has a plurality of apertures that are smaller than the diameter of a childs finger, to prevent children from tampering with the cellulose substrate, wherein a portion of the outer cover is transparent, wherein some of the plurality of apertures are side apertures located along edges of the outer cover; and
means for mounting the outer cover on the structure at the known location for active termite activity, wherein the means for mounting secures the top cover to the bottom cover so that the top cover and the bottom cover define the outer cover and the means for mounting is connected to the outer cover.

Also according to the present invention there is provided a method for controlling termites in a structure with a known location for active termite activity, comprising the steps of:
locating an active termite tube in the structure; and
placing an apparatus in accordance with the invention, adjacent to the active termite tube, wherein the step of placing an apparatus, comprises the steps of:
   removing part of the active termite tube at a location creating openings in the termite tube; and
   placing the apparatus for controlling termites in the location of the removed part of the termite tube so that the termite tube openings align with said side apertures; and
   mounting the outer cover on a wall of the structure.

The invention uses a cellulose bait impregnated with a slow acting toxicant normally held in a tamper resistant container, which is placed within or mounted on the structure. The tamper resistant container, makes the container safe to use around children and still allows termite entry. The apparatus of the invention can be provided with a large surface area to intercept social insects in the ground moving in a generally horizontal direction.

Figure 1 is a perspective view of a preferred embodiment of an inventive bait station.

Figure 2 is a sectional view of the bait station in Figure 1 along lines 2 - 2. Figure 3 is a perspective view of the bait station in Figure 1, in a flipped position.

Figure 4 is an exploded view of the bait station in Figure 1.

Figure 5 is a schematic view of the bait station in Figure 1 mounted in a structure.

Figure 6 is an exploded view of another preferred embodiment of a bait station.

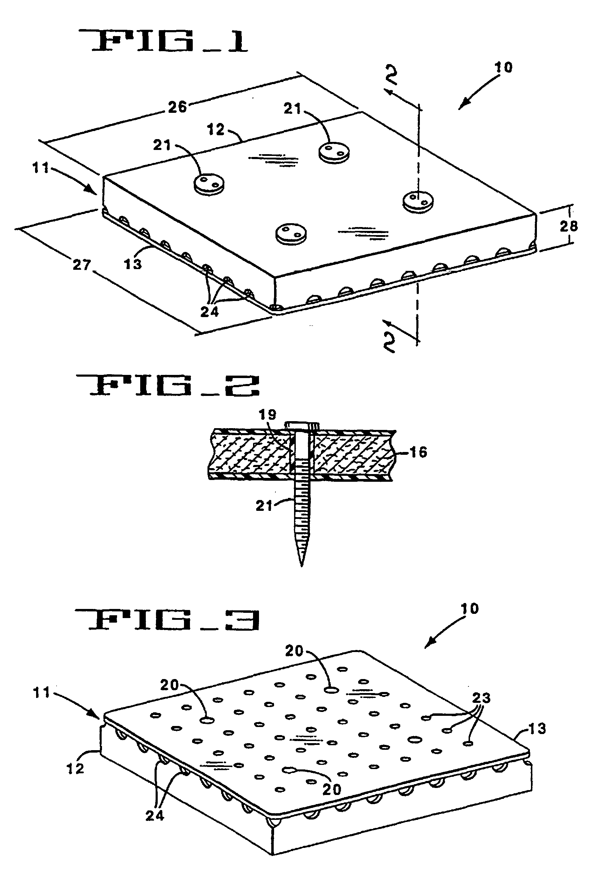

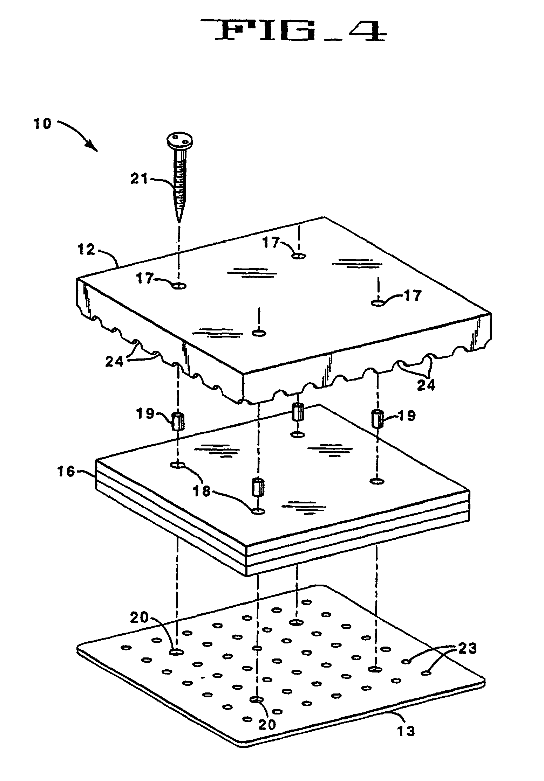

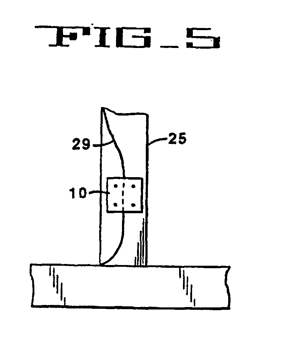

In Figures 1, 2, 3, 4 a bait station 10 has an outer cover 11, comprising an opaque plastic top cover 12 and a transparent plastic bottom cover 13. The outer cover 11, forms a flat box shape, with the top cover 12 forming five sides of the flat box and the bottom cover 13 forming one side of the flat box. One side of the top cover 12 and the bottom cover 13 form the sides of the flat box with the greatest area. Between the top cover 12 and the bottom cover 13 is a piece of a cardboard substrate 16 impregnated with a slow acting toxicant such as sulfluramid. In the specification and claims, a slow acting toxicant is defined as a toxicant that requires longer than 24 hours and less than 2160 hours after ingestion of a termiticidally effective amount to kill a termite. The cardboard 16 is surrounded by the top cover 12 and the bottom cover 13. The top cover 12 is welded to the bottom cover 13 forming the tamper resistant outer cover 11.

The top cover 12 has a plurality of top cover screw holes 17. The cardboard 16 has a plurality of cardboard screw holes 18, which mate with the top cover screw holes 17. A plurality of spacers 19 are provided, with a spacer 19 in each cardboard screw hole 18. The bottom cover 13 has a plurality of bottom cover screw holes 20, which mate with the cardboard screw holes 18. A plurality of screws 21 are provided with a screw 21 passing through a top cover screw hole 17 and its mating cardboard screw hole 18, and its mating bottom cover screw hole 20. As the screw 21 passes through the cardboard screw hole 18 it also passes through a spacer 19. The screws 21 provide a means for mounting the bait station 10 to a structure. The heads of the screws 21 are specially designed to make the bait station 10 tamper resistant.

The bottom cover 13 has a plurality of bottom cover apertures 23 in the shape of circles. Side apertures 24 are formed at the junction where the top cover 12 and the bottom cover 13 meet. The bottom cover apertures 23 and the side apertures 24 are smaller than the diameter of a child's finger, to prevent children from touching the cardboard 16, thus helping to make the bait station tamper resistant.

The outer cover 11 has a length 26, a width 27, and a thickness 28. To provide a desirable surface area to volume ratio both the length 26 and width 27 are at least five times greater than the thickness 28 of the outer cover 11. To utilize this desirable surface area to volume ratio, the apertures 23, 24 extend substantially along the length and width of the outer cover 11.

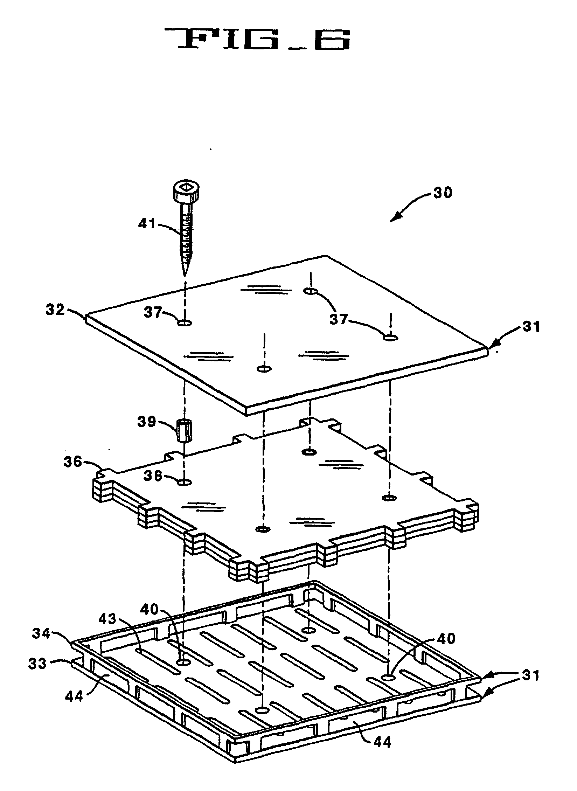

In operation, an active termite tube in a structure is located. The bait station 10 is mounted on the structure using the screws 21, so that the termite tube openings align with the side apertures 24. Figure 5 is a schematic view of a bait station 10 mounted on a structure 25. A termite tube 29 is located. Part of the termite tube is broken away to allow alignment of the side apertures 24 of the bait station 10 with the termite tube 29. The termites will rebuild the termite tube into the bait station 10. Termites passing through the termite tube pass through the side apertures to the cardboard. The termites eat the cardboard, taking in the slow acting toxicant. The termites go back to the colony before the slow acting toxicant kills the termite, and shares the cardboard with the rest of the colony. This provides the slow acting toxicant to the colony, thus killing the whole colony. Therefore the invention provides a means for controlling a termite colony. The controlling of a termite colony means any of the following: the killing of the whole colony, or stopping the destruction caused by the colony, or substantially eliminating the colony.

In an alternative method of operation, if termites are under the floor boards, a bait station 10 may be placed on the termites with the bottom cover 13 on the bottom. Termites would then enter the bait station 10 through the bottom cover apertures 23. The termites again ingest the cardboard and the slow acting toxicant, taking the toxicant back to the colony.

The transparent bottom allows the cardboard 16 to be viewed when the bait stations are removed from the structure. Viewing the cardboard 16 allows the determination of the effectiveness of the location of the bait station 10, and whether the colony has been eradicated, and whether the bait station 10 or the cardboard substrate 16 needs replacing.

In Figure 6 a bait station 30 has an outer cover 31, comprising a tinted transparent plastic top cover 32, an opaque plastic bottom cover 33, and an opaque side cage 34 between the top cover 32 and bottom cover 33 and around the outer edges of the top cover 32 and the bottom cover 33. The outer cover 31, forms a flat box shape, with the top cover 32 forming a side of the flat box with the greatest area, and the bottom cover 33 forming the other side of the flat box with the greatest area, and the side cage 34 forming the four sides of the flat box with the smallest areas. Between the top cover 32 and the bottom cover 33 and within the perimeter formed by the side cage 34 is a piece of cardboard 36 impregnated with a slow acting toxicant such as sulfluramid. The side cage 34 is welded to the bottom cover 33.

The top cover 32 has a plurality of top cover screw holes 37. The cardboard 36 has a plurality of cardboard screw holes 38, which mate with the top cover screw holes 37. A plurality of spacers 39 are provided, with a spacer 39 in each cardboard screw hole 38. The bottom cover 33 has a plurality of bottom cover screw holes 40, which mate with the cardboard screw holes 38. A plurality of screws 41 are provided with a screw 41 passing through a top cover screw hole 37 and its mating cardboard screw hole 38, and its mating bottom cover screw hole 40. As the screw 41 passes through the cardboard screw hole 38 it also passes through a spacer 39. The screws 41 provide a means for mounting the bait station 30 to a structure. The screws 41 also secure the top cover 32 to the bottom cover 33 so that the edges of the top cover 32 press against the side cage 34 forming the outer cover 31 and making the outer cover 31 tamper resistant. The heads of the screws 41 are square socket heads.

The bottom cover 33 has a plurality of bottom cover apertures 43 in the shape of slots. Side apertures 44 are formed at the junction where the side cage 34 and the bottom cover 33 meet. The bottom cover apertures 43 and the side apertures 44 are small enough to prevent children from touching the cardboard 16. thus helping to make the bait station 30 tamper resistant.

The operation of this bait station 30 is the same as the bait station 10 above. The tinted transparent plastic top cover 32 allows inspection of the cardboard 36 without removing the bait station 30.

Another method of operation would provide screws 41 that are just long enough to reach from the top cover screw holes 37 to the bottom cover screw holes 40. As the user mounts the bait station 30, a screw 41 is removed and replaced with a longer screw. This allows longer screws 41 to be used only where needed for mounting the bait station 41.

The cardboard 16, 36 in these embodiments may be replaced with other cellulose baits that are ingested by termites, such as paper or wood. The slow acting toxicant may be any toxicant that requires more than 24 hours and less than 6 months after ingestion of a termiticidally effective amount to kill a termite. Slow acting toxicants useful in the present invention include, but are not limited to: boric acid/borate, hydramethylnon, macrolide antibiotics (e.g., spinosyn A and/or D, abamectin and milbemycin), insect growth regulators such as molting disrupters or juvenile hormone agonists/antagonists, biological agents (i.e., living organisms or their reproductive stages), protozoacides, known termiticides, slow acting poisons or mixtures thereof. Specific examples of molting disrupters include chitin inhibitors, particularly benzoylureas such as hexaflumuron. A preferred type of toxicant is the class of compounds described in United States Patent Numbers 4,921,696 and 5,177,107.
A particularly preferred toxicant of this class is sulfluramid. Other particularly preferred toxicants are abamectin, hydramethylnon, hexaflumuron. A preferred slow acting toxicant would be a toxicant that requires longer than 96 hours and less than 720 hours after ingestion of a termiticidally effective amount of toxicant to kill a termite.

In these embodiments to obtain a desired surface area to volume ratio, the outer container has a length, width and thickness, wherein the length and width of the outer container are both five times greater than the thickness of the outer container, and wherein the apertures extend along the length or width of the containers.

The amount of toxicant needed to control termites will vary. depending on the particular toxicant used. but in general an amount between about 1 and about 5,000 parts per million (ppm) of toxicant to bait will be utilized in the cellulose bait. For example, if sulfluramid is the toxicant, an amount between about 10 and about 200 ppm may be used, preferably between about 50 and about 100 ppm, and if abamectin is the toxicant, an amount between about 10 and about 200 ppm may be used, preferably between about 50 and about 100 ppm.

In a field test, a cardboard substrate was impregnated with sulfluramid at 100 ppm. and placed in an outer cover with apertures. The apertures were aligned with at least one active termite tube in a structure and the outer cover was mounted on the structure. In 13 structures control was obtained on an average of 72 days.

While preferred embodiments of the present invention have been shown and described herein, it will be appreciated that various changes and modifications may be made therein without departing from the invention as defined by the appended claims.

## Claims

1. An apparatus for controlling termites in a structure with a known location for active termite activity, comprising:
a cellulose substrate (16;36) impregnated with a slow acting toxicant;
an outer cover (11;31), further comprising a top cover (12;32) and a bottom cover (13;33), wherein the outer cover (11;31) surrounding the cellulose substrate (16;36), wherein the outer cover (11;31) has a plurality of apertures (23,24;43,44) that are smaller than the diameter of a childs finger, to prevent children from tampering with the cellulose substrate, wherein a portion of the outer cover is transparent, wherein some (24;44) of the plurality of apertures (23,24;43,44) are side apertures (24; 44) located along edges of the outer cover; and
the apparatus being **characterised in that** it comprises means for mounting the outer cover (11;31) on the structure at the known location for active termite activity, wherein the means for mounting secures the top cover (12;32) to the bottom cover (13;33) so that the top cover (12;32) and the bottom cover (13;33) define the outer cover (11;31) and the means for mounting is connected to the outer cover (11;31).

2. An apparatus as claimed in claim 1, wherein the means for mounting the outer cover comprises a plurality of screws (21;41), passing through the outer cover.

3. An apparatus as claimed in claim 1 or 2, wherein the cellulose substrate (16;36) is a flat piece of cardboard.

4. An apparatus as claimed in any one of the preceding claims, wherein the slow acting toxicant kills a termite in a time period between 96 hours and 720 hours after ingestion of a termiticidally effective amount of the toxicant by the termite.

5. An apparatus as claimed in any one of the preceding claims, wherein the slow acting toxicant is selected from the group consisting of: boric acid, borate, hydramethylnon, macrolide antibiotics, insect growth regulators, biological agents, protozoacides, termiticides, and slow acting poisons.

6. An apparatus as claimed in claim 5, wherein the slow acting toxicant is selected from the group consisting of sulfuramid abamectin, hydramethylnon, hexaflumuron, spinosyn A, spinosyn D and mixtures thereof.

7. An apparatus as claimed in any one of the preceding claims, wherein said substrate (16;36) is positioned within said cover (11;31) to permit ingress of a termite through at least one of a plurality of apertures (23,24;43,44) located on one side of said outer cover and egress of said termite through at least one of a plurality of apertures located at an opposite side of said outer cover.

8. An apparatus as claimed in any one of the preceding claims, wherein said some (24;44) of the plurality of apertures (23,24;43,44) are positioned at edges ofthe outer cover (11;31).

9. A method for controlling termites in a structure with a known location for active termite activity, comprising the steps of:
locating an active termite tube in the structure; and
placing an apparatus as claimed in any one of the preceding claims, adjacent to the active termite tube, wherein the step of placing an apparatus, comprises the steps of:
removing part of the active termite tube at a location creating openings in the termite tube; and
placing the apparatus for controlling termites in the location of the removed part of the termite tube so that the termite tube openings align with said side apertures (24; 44); and
mounting the outer cover on a wall of the structure.

10. A method as claimed in claim 9, wherein said substrate is positioned within said cover to permit both ingress of a termite through at least one of the plurality of apertures (23,24;43,44) located on one side of said outer cover (11;31) and egress of said termite through at least one of the plurality of apertures (23,24;43,44) located on an opposite side of said outer cover.

11. A method as claimed in claim 9 or 10, wherein some of said plurality of apertures (23,24;43,44) are positioned at the edges of the outer cover (11;31).

## Patentansprüche

1. Eine Vorrichtung zur Termitenbekämpfung in einem Gefüge an einer bekannten Stelle für aktive Termitentätigkeit, bestehend aus:
einem Cellulosesubstrat (16; 36), das mit einem langsam wirkenden Giftstoff imprägniert ist;
einer äußeren Abdeckung (11; 31), ferner bestehend aus einer oberen Abdeckung (12; 32) und einer unteren Abdeckung (13; 33), wobei die äußere Abdeckung (11; 31) das Cellulosesubstrat (16; 36) umgibt, wobei die äußere Abdeckung (11; 31) eine Vielzahl von Öffnungen (23, 24; 43, 44), die kleiner als der Fingerdurchmesser eines Kindes sind, aufweist, um zu verhindern, dass sich Kinder an dem Cellulosesubstrat vergreifen, wobei ein Teil der äußeren Abdeckung transparent ist, wobei einige (24; 44) der Vielzahl von Öffnungen (23, 24; 43, 44) Seitenöffnungen (24; 44) sind, die sich entlang den Kanten der äußeren Abdeckung befinden; und
wobei die Vorrichtung **dadurch gekennzeichnet ist, dass** sie aus einem Mittel zur Befestigung der äußeren Abdeckung (11; 31) an dem Gefüge an der bekannten Stelle für aktive Termitentätigkeit besteht, wobei das Mittel zur Befestigung die obere Abdeckung (12; 32) an der unteren Abdeckung (13; 33) befestigt, so dass die obere Abdeckung (12; 32) und die untere Abdeckung (13; 33) die äußere Abdeckung (11; 31) definieren und das Mittel zur Befestigung mit der äußeren Abdeckung (11; 31) verbunden ist.

2. Vorrichtung gemäß Anspruch 1, wobei das Mittel zur Befestigung der äußeren Abdeckung aus einer Vielzahl von Schrauben (21; 41), die durch die äußere Abdeckung gehen, besteht.

3. Vorrichtung gemäß Anspruch 1 oder 2, wobei das Cellulosesubstrat (16; 36) ein flaches Pappstück ist.

4. Vorrichtung gemäß einem der vorhergehenden Ansprüche, wobei der langsam wirkende Giftstoff eine Termite, in einem Zeitraum von zwischen 96 Stunden und 720 Stunden nach der Nahrungsaufnahme einer termitenwirksamen Giftstoffmenge durch die Termite, tötet.

5. Vorrichtung gemäß einem der vorhergehenden Ansprüche, wobei der langsam wirkende Giftstoff aus der Gruppe ausgewählt wird, die aus Folgendem besteht: Borsäure, Borat, Hydramethylnon, Makrolid-Antibiotika, Insektenwachstumsregler, biologischen Agenzien, Mitteln gegen Protozoen, Termitiziden und langsam wirkenden Giften.

6. Vorrichtung gemäß Anspruch 5, wobei der langsam wirkende Giftstoff aus der Gruppe ausgewählt wird, die aus Sulfuramid, Abamectin, Hydramethylnon, Hexaflumuron, Spinosyn A, Spinosyn D und Mischungen daraus, besteht.

7. Vorrichtung gemäß einem der vorhergehenden Ansprüche, wobei das Substrat (16; 36) innerhalb der Abdeckung (11; 31) platziert ist, um den Eintritt einer Termite durch mindestens eine einer Vielzahl von Öffnungen (23, 24; 43, 44), die sich auf einer Seite der äußeren Abdeckung befinden, und den Austritt der Termite durch mindestens eine einer Vielzahl von Öffnungen, die sich auf einer gegenüberliegenden Seite der äußeren Abdeckung befinden, zu ermöglichen.

8. Vorrichtung gemäß einem der vorhergehenden Ansprüche, wobei die einigen (24; 44) der Vielzahl von Öffnungen (23, 24; 43, 44) an den Kanten der äußeren Abdeckung (11; 31) positioniert sind.

9. Ein Verfahren zur Termitenbekämpfung in einem Gefüge an einer bekannten Stelle für aktive Termitentätigkeit, bestehend aus folgenden Schritten:
Finden eines aktiven Termitentunnels in dem Gefüge; und
Platzieren einer Vorrichtung gemäß einem der vorhergehenden Ansprüche neben dem aktiven Termitentunnel, wobei der Schritt des Platzierens einer Vorrichtung aus folgenden Schritten besteht:
Entfernen eines Teils des aktiven Termitentunnels an einer Stelle, wodurch Öffnungen im Termitentunnel geschaffen werden; und
Platzieren der Vorrichtung zur Termitenbekämpfung an der Stelle des entfernten Teils des Termitentunnels, so dass sich die Termitentunnelöffnungen mit den Seitenöffnungen (24; 44) ausrichten; und
Befestigen der äußeren Abdeckung an einer Wand des Gefüges.

10. Verfahren gemäß Anspruch 9, wobei das Substrat innerhalb der Abdeckung positioniert ist, um sowohl den Eintritt einer Termite durch mindestens eine der Vielzahl von Öffnungen (23, 24; 43, 44), die sich auf einer Seite der äußeren Abdeckung (11; 31) befinden, als auch den Austritt der Termite durch mindestens eine der Vielzahl von Öffnungen (23, 24; 43, 44), die sich auf einer gegenüberliegenden Seite der äußeren Abdeckung befinden, zu ermöglichen.

11. Verfahren gemäß Anspruch 9 oder 10, wobei einige der Vielzahl von Öffnungen (23, 24; 43, 44) an den Kanten der äußeren Abdeckung (11; 31) positioniert sind.

## Revendications

1. Un appareil destiné à la lutte contre les termites dans une structure ayant un emplacement connu d'activité de termites actifs, comprenant :
un substrat de cellulose (16 ; 36) imprégné d'un toxique à effet lent ;
une couverture externe (11 ; 31), comprenant de plus une couverture supérieure (12 ; 32) et une couverture inférieure (13 ; 33), dans lequel la couverture externe (11 ; 31) entoure le substrat de cellulose (16 ; 36), dans lequel la couverture externe (11 ; 31) a une pluralité d'ouvertures (23, 24 ; 43, 44) qui sont plus petites que le diamètre d'un doigt d'enfant pour empêcher que des enfants touchent au substrat de cellulose, dans lequel une portion de la couverture externe est transparente, dans lequel certaines ouvertures (24 ; 44) parmi la pluralité d'ouvertures (23, 24 ; 43, 44) sont des ouvertures latérales (24 ; 44) situées le long de bords de la couverture externe ; et
l'appareil étant **caractérisé en ce qu'**il comprend un moyen destiné à monter la couverture externe (11 ; 31) sur la structure à l'emplacement connu de l'activité de termites actifs, dans lequel le moyen de montage assujettit la couverture supérieure (12 ; 32) à la couverture inférieure (13 ; 33) de sorte que la couverture supérieure (12 ; 32) et la couverture inférieure (13 ; 33) définissent la couverture externe (11 ; 31) et le moyen de montage est raccordé à la couverture externe (11 ; 31).

2. Un appareil tel que revendiqué dans la revendication 1, dans lequel le moyen destiné à monter la couverture externe comprend une pluralité de vis (21 ; 41) qui traversent la couverture externe.

3. Un appareil tel que revendiqué dans la revendication 1 ou la revendication 2, dans lequel le substrat de cellulose (16 ; 36) est un morceau de carton plat.

4. Un appareil tel que revendiqué dans n'importe laquelle des revendications précédentes, dans lequel le toxique à effet lent tue un termite dans un laps de temps qui va de 96 heures à 720 heures après ingestion par le termite d'une quantité efficace d'un point de vue termiticide du toxique.

5. Un appareil tel que revendiqué dans n'importe laquelle des revendications précédentes, dans lequel le toxique à effet lent est sélectionné dans le groupe constitué : d'acide borique, de borate, d'hydramethylnon, d'antibiotiques macrolides, de régulateurs de croissance d'insectes, d'agents biologiques, d'anti-protozoaires, de termiticides et de poisons à effet lent.

6. Un appareil tel que revendiqué dans la revendication 5, dans lequel le toxique à effet lent est sélectionné dans le groupe constitué de sulfuramide, d'abamectine, d'hydramethylnon, d'hexaflumuron, de spinosyne A, de spinosyne D et de mélanges de celles-ci.

7. Un appareil tel que revendiqué dans n'importe laquelle des revendications précédentes, dans lequel ledit substrat (16 ; 36) est positionné au sein de ladite couverture (11 ; 31) pour permettre l'entrée d'un termite par une ouverture au moins parmi une pluralité d'ouvertures (23, 24 ; 43, 44) situées sur un côté de ladite couverture externe et la sortie dudit termite par une ouverture au moins parmi une pluralité d'ouvertures situées sur un côté opposé de ladite couverture externe.

8. Un appareil tel que revendiqué dans n'importe laquelle des revendications précédentes, dans lequel lesdites certaines ouvertures (24 ; 44) parmi la pluralité d'ouvertures (23, 24 ; 43, 44) sont positionnées au niveau de bords de la couverture externe (11 ; 31).

9. Un procédé destiné à la lutte contre les termites dans une structure ayant un emplacement connu de l'activité de termites actifs, comprenant les étapes consistant :
à installer un tuyau pour termites actifs dans la structure ; et
à placer un appareil tel que revendiqué dans n'importe laquelle des revendications précédentes adjacent au tuyau pour termites actifs, dans lequel l'étape de placement d'un appareil comprend les étapes consistant :
à ôter une partie du tuyau pour termites actifs à un emplacement, ce qui crée des orifices dans le tuyau pour termites ; et
à placer l'appareil destiné à la lutte contre les termites dans l'emplacement de la partie ôtée du tuyau pour termites de sorte que les orifices de tuyau pour termites s'alignent sur lesdites ouvertures latérales (24 ; 44) ; et
à monter la couverture externe sur une paroi de la structure.

10. Un procédé tel que revendiqué dans la revendication 9, dans lequel ledit substrat est positionné au sein de ladite couverture pour permettre à la fois l'entrée d'un termite par une ouverture au moins parmi la pluralité d'ouvertures (23, 24 ; 43, 44) situées sur un côté de ladite couverture externe (11 ; 31) et la sortie dudit termite par une ouverture au moins parmi la pluralité d'ouvertures (23, 24 ; 43, 44) situées sur un côté opposé de ladite couverture externe.

11. Un procédé tel que revendiqué dans la revendication 9 ou la revendication 10, dans lequel certaines ouvertures parmi ladite pluralité d'ouvertures (23, 24 ; 43, 44) sont positionnées au niveau des bords de la couverture externe (11 ; 31).
